**Europäisches Patentamt**

**European Patent Office**

**Office européen des brevets**

(19)

(11) Veröffentlichungsnummer: **0 119 283**
**A1**

(12) # EUROPÄISCHE PATENTANMELDUNG

(21) Anmeldenummer: **83102521.8**

(22) Anmeldetag: **15.03.83**

(51) Int. Cl.³: **B 28 B 11/14**

(43) Veröffentlichungstag der Anmeldung: **26.09.84**
**Patentblatt 84/39**

(84) Benannte Vertragsstaaten: **AT BE CH DE FR GB IT LI NL SE**

(71) Anmelder: **Hebel Gasbetonwerk GmbH,**
**Dr.-Rank-Strasse 1, D-8080 Emmering-Fürstenfeldbruck (DE)**

(72) Erfinder: **Hirabayashi, Yukikazu, 2066 Oaza-beppu**
**Hozumi-cho Motosu-gun, Gifu-ken (JP)**
Erfinder: **Ishihara, Masahiro, 1293-33 Aza-Ashiarai**
**Oaza-ushimaki Hozumi-cho, Motosu-gun Gifu-ken (JP)**

(74) Vertreter: **Liebau, Gerhard, Dipl.-Ing., Birkenstrasse 39,**
**D-8900 Augsburg 22 (DE)**

(54) **Verfahren und Vorrichtung zum Schneiden eines noch plastischen Porenbetonblockes mit einem gespannten Schneiddraht.**

(57) Zum Schneiden eines noch plastischen Porenbetonblockes mit einem gespannten Schneiddraht (12) wird die-ser während des Schneidens quer zu seiner Längsachse in einer Schneideebene relativ zum Porenbetonblock (B) be-wegt. Gleichzeitig wird der Schneiddraht (12) während des gesamten Schneidvorganges auch kontinuierlich in einer Richtung (Q) seiner Längsachse relativ zum Porenbeton-block bewegt.

Eine Vorrichtung zur Durchführung dieses Verfahrens weist einen Schneidrahmen (2) mit zwei zueinander paralle-len Längsholmen (2a, 2b) auf. An den Längsholmen (2a, 2b) des Rahmens (2) ist je ein Schlitten (5, 6) in Längsrichtung des Längsholmes verschiebbar gelagert. An den Schlitten (5, 6) greifen Antriebsvorrichtungen (7–11) an, welche die Schlitten (5, 6) simultan in jeweils gleicher Richtung antrei-ben. Jeder Schlitten (5, 6) trägt eine Führungsrolle (14, 15), über welche der in der Nähe zweier diagonal gegenüberliegender Ecken (2c, 2d) des Schneidrahmens (2) mit diesem verbundene und durch eine Feder (13) gespannte Schneid-draht (12) derart geführt ist, daß er ausgehend von jeder Ecke (2c, 2d) zunächst parallel zum an die jeweilige Ecke angrenzenden Längsholm (2a, 2b), dann über die Führungsrolle (14) des einen Schlittens (5) quer hinüber zu der Führungsrolle (15) des gegenüberliegenden anderen Schlittens (6) verläuft.

Verfahren und Vorrichtung zum Schneiden eines noch plastischen Porenbetonblockes mit einem gespannten Schneiddraht.

Die Erfindung betrifft ein Verfahren und Vorrichtungen zum Schneiden eines noch plastischen Porenbetonblockes mit einem gespannten Schneiddraht, der während des Schneidens quer zu seiner Längsachse in einer Schneidebene relativ zum Porenbetonblock bewegt wird und dem dabei auch in seiner Längsachse eine Längsbewegung relativ zum Porenbetonblock erteilt wird.

Bevor Porenbeton in einem Autoklaven gehärtet wird, muß er in noch plastischem Zustand durch Schnitte in einer oder mehreren Richtungen in einzelne Platten oder Blöcke mit den gewünschten Abmessungen zerschnitten werden. Dies erfolgt allgemein mittels gespannter Schneiddrähte, die einen Durchmesser von etwa 0,6 - 1,5 mm aufweisen. Die Schneiddrähte werden dabei in der Schneidebene nicht nur quer zur Längsachse der Schneiddrähte bewegt, sondern in ihrer eigenen Längsrichtung auch rasch hin- und herbewegt. Der Hub oder die Länge der Hin- und Herbewegung beträgt dabei etwa 30 - 200 mm. Die Hin- und Herbewegung wird im allgemeinen mittels eines Kurbelantriebes erzeugt, so daß die Geschwindigkeit der Längsbewegung ausgehend von einem Umkehrpunkt, an dem die Schneiddrähte stillstehen, sinusförmig bis zu einem Höchstwert zunimmt und dann wieder sinusförmig bis zum Stillstand abnimmt. Der Schneiddraht steht also an den Umkehrpunkten still und hat in der Nähe der Umkehrpunkte nur eine verhältnismäßig geringe Geschwindigkeit. Dies führt dazu, daß bei der Querbewegung des Schneiddrahtes durch den Porenbetonblock in der Nähe der Umkehrpunkte die quer zur Längsachse des Schneiddrahtes auf diesen einwirkenden Querkräfte stark zunehmen, wodurch der Draht entgegengesetzt zur Schnittrichtung nach hinten durchgebogen wird. Infolge von Unregelmäßigkeiten im Porenbetonblock biegt sich der Draht jedoch nicht nur nach hinten durch, sondern er weicht auch seitlich aus. Dies führt dazu, daß die geschnittenen Platten oder Blöcke nicht genau eben sind und auch Maßabweichungen aufweisen. Die Federkraft, welche den Schneiddraht gespannt hält, kann nicht beliebig gesteigert werden, da sonst der Draht reißt. Außerdem weisen die geschnittenen Oberflächen immer in denjenigen Bereichen, in denen eine Umkehr der Längsbewegung der Schneiddrähte stattfindet, eine rauhe Oberfläche auf, die das Aussehen der geschnittenen Platten und Blöcke beeinträchtigt und auch nachteilig ist, wenn später ein Anstrich auf die Platten oder Blöcke aufgetragen werden soll. Die Rauhigkeit der Oberflächen ist ebenfalls darauf zurückzuführen, daß sich die Geschwindigkeit des Drahtes in seiner Längsachse in der Nähe der Umkehrpunkte bis zum Stillstand verlangsamt und erst allmählich wieder zunimmt. Die Geschwindigkeit des hin- und herbewegten Drahtes in Längsrichtung läßt sich auch nicht beliebig steigern, da verhältnismäßig große Massen immer wieder beschleunigt und abgebremst werden müssen.

Der Erfindung liegt die Aufgabe zugrunde, ein Verfahren zum Schneiden eines noch plastischen Porenbetonblockes mit einem gespannten Schneiddraht der eingangs erwähnten Art anzugeben, mit welchem sich unter Vermeidung obiger Nachteile vor allem glattere Oberflächen an den geschnittenen Porenbetonteilen erreichen lassen.

Diese Aufgabe wird nach der Erfindung dadurch gelöst, daß die Längsbewegung des Schneiddrahtes während des gesamten Schneidvorganges kontinuierlich in einer Richtung relativ zum Porenbetonblock erfolgt.

Durch diese kontinuierliche Längsbewegung des Schneiddrahtes in einer Richtung, wird jede Verlangsamung der Bewegung des Schneiddrahtes in seiner Längsrichtung und auch jeder Stillstand vermieden. Die geschnittenen Porenbetonteile weisen infolgedessen eine überraschend glatte und gleichmäßige Oberfläche auf. Da der Schneiddraht kontinuierlich in einer Richtung bewegt wird, sind auch die auf den Schneiddraht wirkenden Rückdruckkräfte verhältnismäßig klein und bewirken keine oder nur eine sehr geringe Durchbiegung des Drahtes. Dies wiederum hat den Vorteil, daß die geschnittenen Porenbetonteile ebene Oberflächen aufweisen und außerdem auch genau maßhaltig sind. Weiterhin hat die Längsbewegung des Drahtes in einer Richtung den Vorteil, daß keine hin- und hergehenden Massen vorhanden sind, so daß die Geschwindigkeit der Längsbewegung des Drahtes beliebig gesteigert und optimal angepaßt werden kann. Die geringeren Rückdruckkräfte, welche auf den Schneiddraht wirken, gestatten es außerdem, auf den Draht eine höhere Zugspannung in Längsrichtung auszuüben, was wiederum der Durchbiegung des Drahtes noch stärker entgegenwirkt.

- 4 -

Die Erfindung, wie sie in den Unteransprüchen gekennzeichnet ist, löst außerdem die Aufgabe, eine Vorrichtung zum Schneiden eines noch plastischen Porenbetonblockes mittels eines Schneiddrahtes zu schaffen, die
bei einfachem Aufbau ein maßgenaues Schneiden der Porenbetonteile mit glatten und ebenen Oberflächen mit hoher
Arbeitsgeschwindigkeit ermöglicht.

Die durch die erfindungsgemäßen Vorrichtungen erreichten
Vorteile sind im wesentlichen die gleichen, wie sie oben
bezüglich des erfindungsgemäßen Verfahrens angegeben
worden sind.

Im folgenden wird die Erfindung anhand von mehreren in
der Zeichnung dargestellten Ausführungsbeispielen näher
erläutert. Es zeigt:

Figur 1 und 2 in perspektivischer Darstellung ein erstes
                Ausführungsbeispiel der erfindungsgemäßen
                Vorrichtung in zwei verschiedenen Arbeitsstellungen,
Figur 3         ein zweites Ausführungsbeispiel in perspektivischer Darstellung,
Figur 4         eine perspektivische Darstellung der Schneiddrahtführung des in Fig. 3 dargestellten Ausführungsbeispieles,
Figur 5 bis 8 schematische Darstellungen von weiteren erfindungsgemäßen Vorrichtungen.

An einem Gestell 1 ist ein Schneidrahmen 2 mittels der
Spindeln 3 höhenbeweglich gelagert. Der im wesentlichen
rechteckige Schneidrahmen 2 weist an seinen zwei gegenüberliegenden parallel zueinander verlaufenden Längsholmen 2a, 2b je eine Führungsschiene 3, 4 auf, an welcher
je ein Schlitten 5, 6 in Längsrichtung der Längsholme 2a,
2b verschiebbar geführt ist.

An jedem der Schlitten 5, 6 greift eine Antriebsvorrichtung an, durch welche die Schlitten 5, 6 simultan in jeweils gleicher Richtung angetrieben werden können. Die Antriebsvorrichtung kann beispielsweise aus je einer an den Schlitten 5, 6 angreifenden endlosen Kette 7 bestehen, welche über Kettenräder 8, 9 umgelenkt ist. Das Kettenrad 8 ist auf einer Welle 10 angeordnet, die von einem Antriebsmotor 11 angetrieben wird. Auf der Welle 10 sitzt auch ein zweites, in der Zeichnung nicht sichtbares Kettenrad, welches einer am Schlitten 6 angreifenden endlosen Kette zugeordnet ist.

Anstelle dieses beschriebenen Antriebes kann auch jede andere Antriebsvorrichtung vorgesehen sein, beispielsweise auch Antriebsspindeln. Es ist auch denkbar, die beiden Schlitten 5, 6 durch einen Bügel miteinander zu verbinden und die Antriebsvorrichtung am Bügel angreifen zu lassen.

Ein Schneiddraht 12 ist in der Nähe einer Ecke 2c des Schneidrahmens 2 mit seinem einen Ende 12a verbunden. Das andere Ende 12b des Schneiddrahtes 12 ist unter Zwischenschaltung einer Feder 13 mit der diagonal gegenüberliegenden Ecke 2d des Schneidrahmens verbunden. Jeder der beiden Schlitten 5, 6 trägt eine Führungsrolle 14, 15. Ausgehend von der Ecke 2c verläuft der Schneiddraht 12 zunächst parallel zu dem an diese Ecke 2c angrenzenden Längsholm 2a und ist dann an der Führungsrolle 14 umgelenkt. Von der Führungsrolle 14 aus verläuft er quer zur Führungsrolle 15 des gegenüberliegenden Schlittens 6 und anschließend wieder parallel zu dem gegenüberliegenden Längsholm 2b zu der Ecke 2d hin.

Die Schlitten 5, 6 sind vorteilhaft so angeordnet, daß sie sich im wesentlichen gegenüberstehen, so daß der Schneiddraht 12 von der einen Führungsrolle 14 zurgegenüberliegenden Führungsrolle 15 im wesentlichen senkrecht zu den Längsholmen 2a und 2b verläuft. Durch diesen im wesentlichen senkrechten Verlauf wird eine möglichst kurze freie Strecke des Schneiddrahtes 12 zwischen den beiden Führungsrollen 14, 15 erreicht. Anstelle der Feder 13 könnte auch jede beliebige andere Spanneinrichtung vorgesehen sein, beispielsweise auch ein hydraulischer oder pneumatischer Zylinder oder ein Gegengewicht. Durch die Feder 13 wird auf den Schneiddraht 12 eine Zugspannung vorbestimmter Größe ausgeübt.

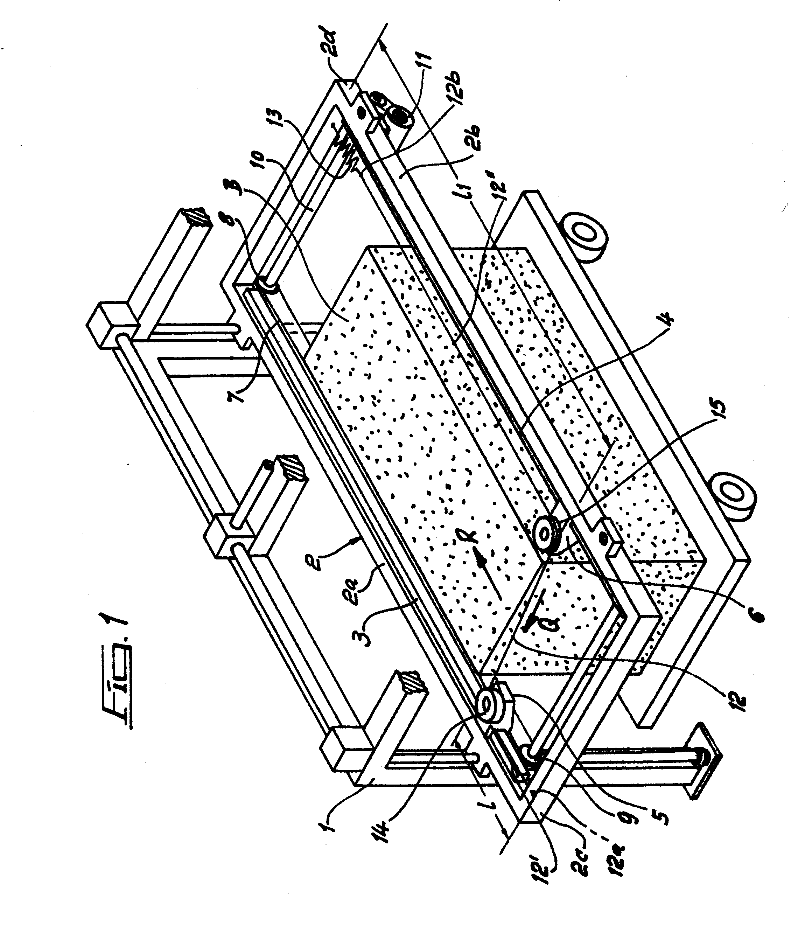

Wenn sich die beiden Schlitten 5, 6 in ihrer in Fig. 1 dargestellten, ersten Endstellung befinden, wird der Porenbetonblock 8 unter den Schneidrahmen 2 verfahren und dann der Schneidrahmen 2 soweit abgesenkt, bis der zwischen den beiden Führungsrollen 14, 15 verlaufende Teil des Schneiddrahtes 12 sich in der gewünschten Höhe befindet. Dann werden die beiden Schlitten 5, 6 mittels der Antriebsvorrichtungen 7 - 11 simultan in Richtung R bewegt. Während dieser Bewegung vergrößert sich ständig die Länge 1 des parallel zum Längsholm 2a verlaufenden Schneiddrahtabschnittes 12', während sich die Länge L1 des parallel zum Längsholm 2b verlaufenden Schneiddrahtabschnittes 12" im gleichen Maß kontinuierlich verkleinert. Dies hat zur Folge, daß der Schneiddraht während er quer zu seiner Längsachse in Richtung R durch den Porenbetonblock 8 hindurchbewegt wird, auch eine Bewegung in Richtung Q seiner Längsachse relativ zum Porenbetonblock 8 ausführt. Der Schneiddraht 12 wird also während des gesamten Schneidvorganges kontinuierlich in einer Richtung Q relativ zum Porenbetonblock 8 bewegt. Durch diese Längsbewegung des Schneiddrahtes in Richtung Q wird die gewünschte glatte Oberfläche erreicht und außerdem sind die auf den Schneiddraht wirkenden, vom zu schneidenden Porenbeton ausgehenden Rückdruckkräfte kleiner, so daß der Draht keine oder nur eine sehr geringe Durchbiegung zwischen den Führungsrollen
14 und 15 erfährt.

Wenn die Schlitten 5, 6 ihre andere Endstellung erreicht
haben, kann der Schneidrahmen 2 um die gewünschte Plattendicke abgesenkt werden, worauf anschließend die
Schlitten 5, 6 in entgegengesetzter Richtung simultan
zurückbewegt werden und dabei ein weiterer Schnitt im
Porenbetonblock B erfolgt.

Es wäre auch denkbar, mehrere gleichartige Schneidrahmen übereinander anzuordnen, um gleichzeitig mehrere
Schnitte in verschiedenen Höhenlagen ausführen zu können.

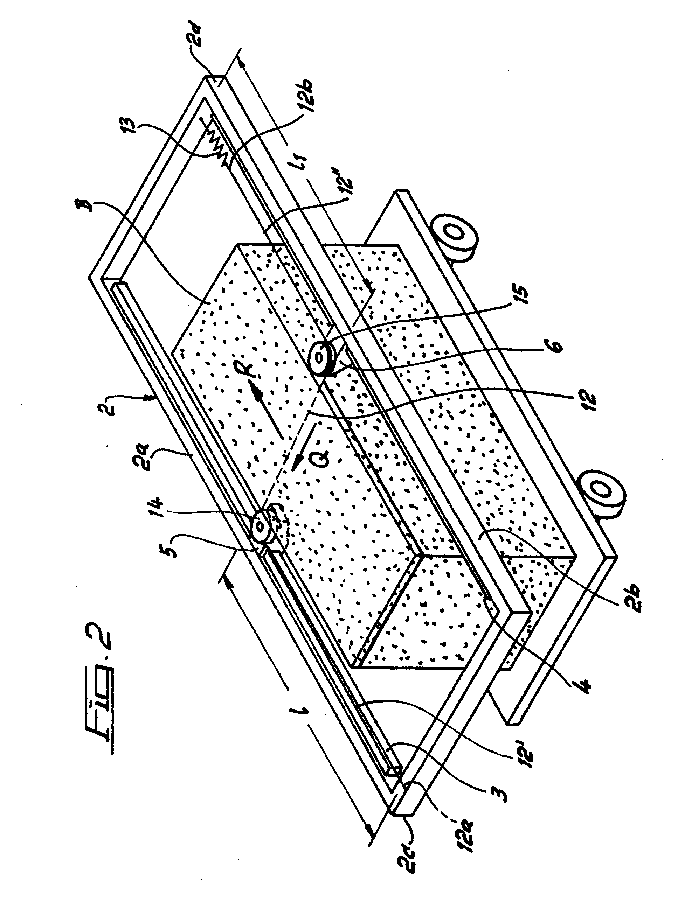

Bei dem in Figur 1 und 2 dargestellten Ausführungsbeispiel entspricht die Relativgeschwindigkeit des Schneiddrahtes 12 in Richtung Q seiner Längsachse der Geschwindigkeit, mit der der Schneiddraht 12 quer zu seiner
Längsachse in Richtung R durch den Porenbetonblock hindurchbewegt wird.

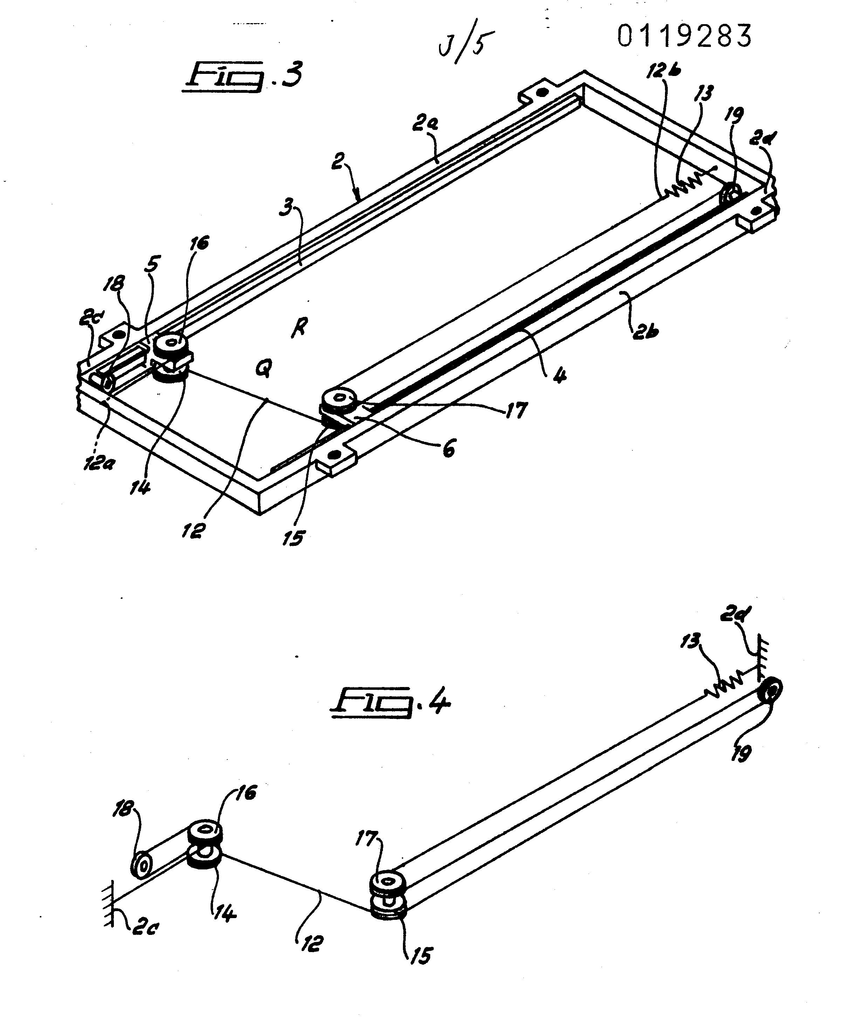

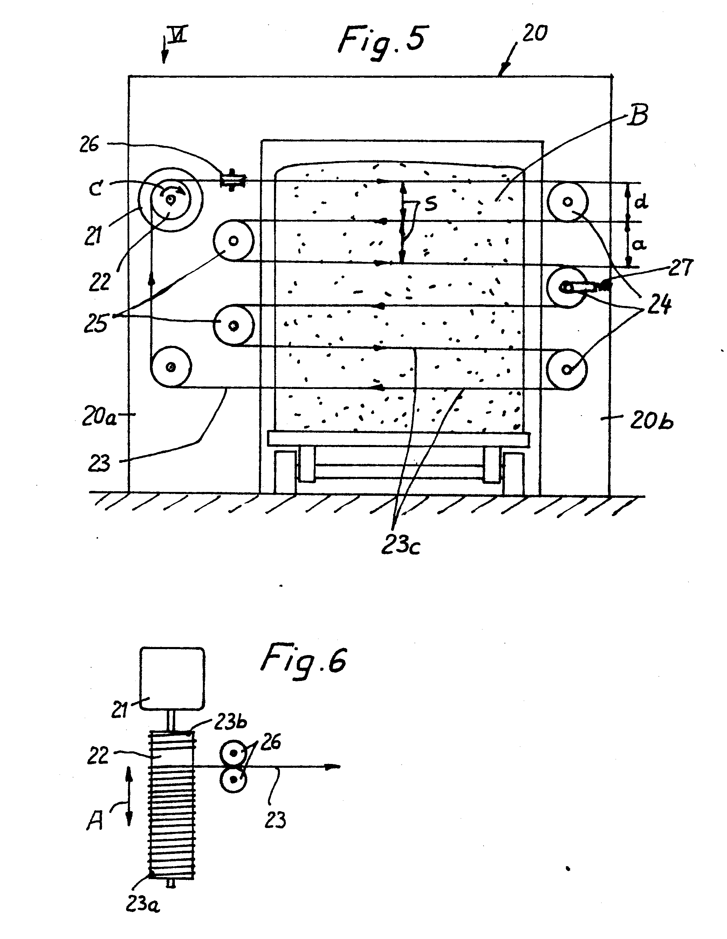

In den Figuren 3 und 4 ist ein abgeändertes Ausführungsbeispiel gezeigt, welches dann verwendet wird, wenn die
Geschwindigkeit in Richtung Q der Längsachse des Drahtes
größer sein soll als die Geschwindigkeit in Richtung R
quer zur Längsachse. Bei dem in Figur 3 und 4 dargestellten Ausführungsbeispiel sind die Teile gleicher Funktion
mit den gleichen Bezugszeichen bezeichnet und obige Beschreibung trifft daher sinngemäß auch auf dieses Ausführungsbeispiel zu. Zusätzlich zu den an jedem Schlitten 5, 6 angeordneten Führungsrollen 14, 15 ist bei dem
in Figur 3 und 4 dargestellten Ausführungsbeispiel an
jedem Schlitten 5, 6 eine Umlenkrolle 16, 17 angeordnet.
Außerdem ist in der Nähe jeder Ecke 2c, 2d, mit welcher
der Schneiddraht mit seinen Enden 12a, 12b verbunden ist,
noch eine weitere Umlenkrolle 18, 19 angeordnet. Der Schneiddraht 12 ist ausgehend von jeder Ecke 2c, 2d flaschenzugartig zunächst über die eine Umlenkrolle 16, 17 an den Schlitten 5, 6 und dann die zweite Umlenkrolle 18, 19 an den Ecken 2c, 2d geführt. Von dieser Umlenkrolle 18, 19 verläuft dann der Schneiddraht 12 wieder über die Führungsrollen 14, 15 an den Schlitten 5, 6, wie beim vorhergehenden Ausführungsbeispiel beschrieben.

Durch die flaschenzugartige Führung des Schneiddrahtes 12 über die Umlenkrollen 16 - 19 wird erreicht, daß die Geschwindigkeit des Schneiddrahtes in Richtung Q seiner Längsachse dreimal so groß ist wie die Geschwindigkeit der Schlitten 5, 6 bzw. die Geschwindigkeit des Drahtes 12 in Richtung R quer zu seiner Längsachse. Wenn man an den Schlitten 5, 6 und den Ecken weitere Umlenkrollen vorsieht, so kann man die Geschwindigkeit noch steigern.

Bei dem in Figur 5 dargestellten portalartigen Schneidgestell 20, welches auch als U-förmiger oder rechteckiger Rahmen ausgebildet sein könnte, ist an dem einen Holm 20a eine mittels des Motors 21 antreibbare Windentrommel 22 vorgesehen. Teilstücke des Schneiddrahtes 23 sind auf der Windentrommel 23 aufgewickelt, wobei das eine Ende 23a des Schneiddrahtes an dem einen Ende der Windentrommel 22 und das andere Ende 23b des Schneiddrahtes am anderen Ende der Windentrommel 22 festgelegt sind. Die auf die Windentrommel 22 aufgewickelten Teilstücke des Schneiddrahtes 23 sind jeweils in gleicher Windungsrichtung und nur in einer Lage aufgewickelt. An den mit Abstand voneinander angeordneten Holmen 20a, 20b des Schneidrahmens 20 sind übereinander ferner mehrere Umlenkrollen 24, 25 angeordnet, deren Achsen parallel zueinander und parallel zur Achse der Windentrommel 23 verlaufen. Der Durchmesser d dieser Führungsrollen 24, 25 und ihr gegenseitiger lichter Abstand a ist so groß wie die Dicke s der aus dem Porenbetonblock B zu schneidenden einzelnen Platten oder Blöcke. Zwischen den Umlenkrollen 24, 25 ist der Schneiddraht 23 in mehreren, parallel zueinander verlaufenden Teilstrecken 23c mäanderförmig zwischen den beiden Holmen 20a und 20b hin- und hergeführt. Vorteilhaft ist weiterhin die Windentrommel in Richtung A ihrer Achse verschiebbar gelagert, wobei zur Verschiebung auch ein entsprechendes Getriebe, welches von dem Antriebsmotor 21 angetrieben wird, vorgesehen sein kann. Auf diese Weise kann man erreichen, daß die Stelle, von der sich der Schneiddraht 23 von der Windentrommel löst, gegenüber den Führungsrollen 26 immer an der gleichen Stelle bleibt. Durch eine an einer oder mehreren Umlenkrollen 24 angreifende Feder 27 wird der Schneiddraht 23 gespannt gehalten.

Zum Schneiden des Porenbetonblockes B wird die Windentrommel in einer Richtung, beispielsweise in Richtung C gedreht, wodurch sich eine Teillänge des Schneiddrahtes von der Widentrommel 22 abwickelt. Gleichzeitig wird aber die andere Teillänge des Schneiddrahtes auf der Windentrommel 22 wieder aufgewickelt. Dem Schneiddraht 23 wird hierdurch eine Längsbewegung in Richtung seiner Längsachse erteilt. Durch Veränderung der Drehzahl des Motors 21 kann man die Geschwindigkeit des Schneiddrahtes in Richtung seiner Längsachse beliebig einstellen. Zum Schneiden des Porenbetonblockes wird dieser bei laufender Windentrommel 22 quer zu den Teilstücken 23 jedes Schneiddrahtes 23, d.h. gemäß Figur 5 senkrecht zur Zeichenebene bewegt. Figur 6 zeigt eine Teildraufsicht auf die Windentrommel in Richtung 6 der Figur 5. Die Windentrommel 22 wird kontinuierlich in der gleichen Drehrichtung C angetrieben, bis der Schneidvorgang beendet ist. Beim nächsten Schneidvorgang wird die Drehrichtung der Windentrommel 22 einfach umgekehrt.

Damit man mit der in Figur 5 dargestellten Vorrichtung auch Platten oder Blöcke mit anderen Dicken s schneiden kann, sind die Umlenkrollen 24, 25 gegen Umlenkrollen mit anderen Durchmessern austauschbar. Auch der Achsabstand der Umlenkrollen kann zu dem gleichen Zweck verändert werden.

Eine andere Variante der in Figur 5 dargestellten Vorrichtung würde darin bestehen, daß man das Schneidgestell 20 senkrecht zur Zeichenebene verschiebbar macht und den Porenbetonblock während des Schneidens ruhen läßt.

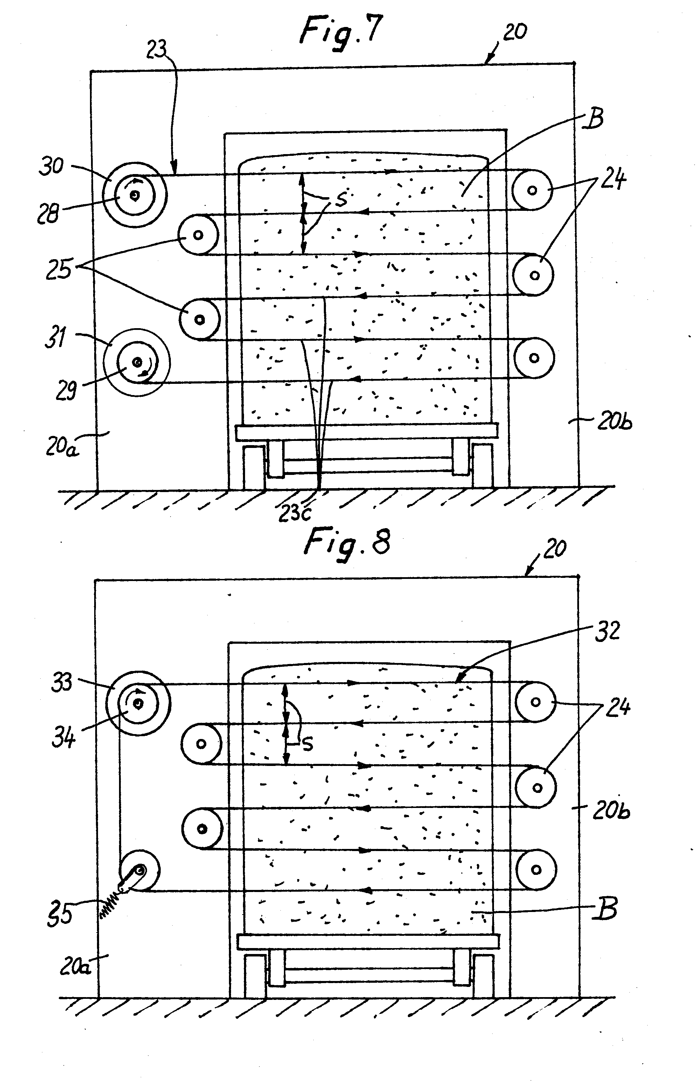

Wenn es darauf ankommt, den Abstand s der Teilstrecken 23c des Schneiddrahtes 23 häufiger zu ändern, so ist u.U. die in Figur 7 dargestellte Ausführungsform zweckmäßiger. Hierbei sind ähnlich wie beim vorhergehenden Ausführungsbeispiel wieder mehrere Umlenkrollen 24, 25 an den beiden Holmen 20a, 20b des Schneidgestells 20 angeordnet. Abweichend von dem vorhergehend beschriebenen Ausführungsbeispiel sind jedoch zwei Windentrommeln 28, 29 vorgesehen, die je durch einen eigenen Motor 30, 31 so angetrieben werden, daß der Schneiddraht 23 auf der einen Windentrommel 29 aufgewickelt wird, während er von der anderen Windentrommel 28 abgewickelt wird. Nach Beendigung des Schneidvorganges wird dann beim nächsten Schneidvorgang die Drehrichtung beider Windentrommeln umgekehrt. Über entsprechende elektrische Schaltungen kann man erreichen, daß das Drehmoment desjenigen Motors, welcher die aufwickelnde Windentrommel antreibt, größer ist, als das Bremsmoment des Motors, welcher die abwickelnde Windentrommel antreibt. Durch den Unterschied der beiden Drehmomente wird dem Schneiddraht 23 die gewünschte Zugspannung erteilt. Wenn man bei diesem Ausführungsbeispiel den Abstand und die Anzahl der Umlenkrollen ändert und dementsprechend auch mehr oder weniger

0119283

Teilstrecken 23c erhält, so kann die hierdurch bedingte wirksame Länge des Schneiddrahtes leicht dadurch ausgeglichen werden, daß man auf den Windentrommeln 28, 29 mehr oder weniger Teillänge des Schneiddrahtes aufwickelt.

Zum Schneiden von Porenbeton werden in der Regel einlitzige Stahldrähte verwendet, mit einem Druchmesser von etwa 0,6 - 1 mm. Wenn es gelingt, die Enden derartiger Stahldrähte übergangsfrei und dauerhaft miteinander zu verbinden, so könnte auch die in Figur 8 dargestellte Vorrichtung brauchbar sein. Hierbei bildet der Schneiddraht 32 eine endlose Schlinge, die ähnlich wie bei den vorangegangenen Ausführungsbeispielen mäanderförmig über mehrere im Schneidgestell 20 angeordnete Umlenkrollen 24, 25 geführt ist. Mittels einer durch den Motor 33 angetriebenen Antriebsrolle 34, über die der endlose Schneiddraht 32 geführt ist, kann dieser während der Schneidbewegung kontinuierlich in einer Richtung seiner Längsachse angetrieben werden.

Die Erfindung wurde vorstehend anhand von Vorrichtungen beschrieben, welche den Porenbetonblock waagerecht schneiden. Selbstverständlich kann die Vorrichtung auch zur Ausführung von Schnitten in lotrechten Ebenen oder jeder beliebigen anderen Richtung ausgestaltet sein.

Patentansprüche

1. Verfahren zum Schneiden eines noch plastischen Porenbetonblockes mit einem gespannten Schneiddraht (12), der während des Schneidens quer zu seiner Längsachse in einer Schneidebene relativ zum Porenbetonblock (B) bewegt wird und dem dabei auch in Richtung seiner Längsachse eine Längsbewegung relativ zum Porenbetonblock erteilt wird, dadurch gekennzeichnet, daß die Längsbewegung des Schneiddrahtes (12) während des gesamten Schneidvorganges kontinuierlich in einer Richtung (Q) relativ zum Porenbetonblock erfolgt.

2. Vorrichtung zur Durchführung des Verfahrens nach Anspruch 1, mit einem zwei zueinander parallele Längsholme (2a, 2b) aufweisenden Schneidrahmen (2), in welchem der von einem Längsholm (2a) zum anderen Längsholm (2b) quer verlaufende Schneiddraht (12) durch eine Spanneinrichtung, vorzugsweise eine Feder (13), gespannt gehalten wird, dadurch gekennzeichnet, daß an den Längsholmen (2a, 2b) des Rahmens (2) je ein Schlitten (5, 6) in Längsrichtung des Längsholmes verschiebbar gelagert ist, daß an den Schlitten (5, 6) Antriebsvorrichtungen (7 - 11) angreifen, welche die Schlitten (5, 6) simultan in jeweils gleicher Richtung antreiben, daß jeder Schlitten (5, 6) eine Führungsrolle (14, 15) trägt, über welche der in der Nähe zweier diagonal gegenüberliegender Ecken (2c, 2d) des Schneidrahmens (2) mit diesem verbundene Schneiddraht (12) derart geführt ist, daß er ausgehend von jeder Ecke (2c, 2d) zunächst parallel zum an die jeweilige Ecke angrenzenden Längsholm (2a, 2b), dann über die Führungsrolle (14) des einen Schlittens (5) quer hinüber zu der Führungsrolle (15) des gegenüberliegenden anderen Schlittens (6) verläuft. (Fig. 1 - 4)

0119283

3. Vorrichtung nach Anspruch 2, dadurch gekennzeichnet, daß die Schlitten (5, 6) in jeder Betriebsstellung einander gegenüberstehen, so daß der Schneiddraht (12) von der einen Führungsrolle (14) zur gegenüberliegenden Führungsrolle (15) im wesentlichen senkrecht zu den Längsholmen (2a, 2b) verläuft.

4. Vorrichtung nach Anspruch 2 oder 3, dadurch gekennzeichnet, daß an jedem Schlitten (5, 6) zusätzlich zu der Führungsrolle (14, 15) zumindest eine Umlenkrolle (16, 17) gelagert ist, daß in der Nähe jeder Ecke (2c, 2d), mit der der Schneiddraht (12) verbunden ist, mindestens eine weitere Umlenkrolle (18, 19) angeordnet ist, und daß der Schneiddraht (12) ausgehend von jeder Ecke (2c, 2d) zuerst flaschenzugartig über die Umlenkrollen (16 - 19) und dann über die Führungsrollen (14, 15) geführt ist. (Fig. 3, 4)

5. Vorrichtung zur Durchführung des Verfahrens nach Anspruch 1, mit einem zwei in Abstand voneinander angeordnete Holme (20a, 20b) aufweisenden Schneidgestell (20), in welchem der von einem Holm (20a) zum anderen Holm (20b) verlaufende Schneiddraht (23) gespannt gehalten wird, dadurch gekennzeichnet, daß an dem einen Holm (20a) eine antreibbare Windentrommel (22) angeordnet ist, auf die zwei Teillängen des Schneiddrahtes (23) so aufgewickelt sind, daß bei Drehung der Windentrommel (22) die eine Teillänge aufgewickelt und die andere Teillänge abgewickelt wird, wobei der Schneiddraht (23) von der Windentrommel (22) über mindestens eine am anderen Holm (20b) angeordnete Umlenkrolle (24) geführt ist. (Fig. 5, 6)

6. Vorrichtung zur Durchführung des Verfahrens nach Anspruch 1, mit einem zwei in Abstand voneinander angeordnete Holme (20a, 20b) aufweisenden Schneidgestell

- 14 -

(20), in welchem der von einem Holm (20a) zum anderen Holm (20b) verlaufende Schneiddraht (23) gespannt gehalten wird, dadurch gekennzeichnet, daß in dem Schneidgestell (20) zwei Windentrommeln (28, 29) vorgesehen sind, auf die Teillängen des zwischen den beiden Windentrommeln (28, 29) auf mindestens einer Teilstrecke (23c) geradlinig verlaufenden Schneiddrahtes (23) aufgewickelt sind und die während des Schneidens simultan derart antreibbar sind, daß der Schneiddraht (23) unter Zugspannung auf der einen Windentrommel (29) aufgewickelt wird, während er von der anderen Windentrommel (28) abgewickelt wird und umgekehrt. (Fig. 7)

7. Vorrichtung zur Durchführung des Verfahrens nach Anspruch 1, mit einem zwei in Abstand voneinander angeordnete Holme (20a, 20b) aufweisenden Schneidgestell (20), in welchem der von einem Holm (20a) zum anderen Holm (20b) verlaufende Schneiddraht (32) durch eine Spanneinrichtung (35) gespannt gehalten wird, dadurch gekennzeichnet, daß der Schneiddraht (32) eine endlose Schlinge bildet und über eine an dem einen Holm (20a) vorgesehene Antriebsrolle (34) sowie mindestens eine am anderen Holm (20b) vorgesehene Umlenkrolle (24) geführt ist. (Fig. 8)

8. Vorrichtung nach Anspruch 5, 6 oder 7, dadurch gekennzeichnet, daß an den Holmen (20a, 20b) des Schneidgestells (20) mehrere Umlenkrollen (24, 25) in einem gegenseitigen Abstand (a), welcher der Dicke (S) der zu schneidenden Platte entspricht, angeordnet sind, über die der Schneiddraht (23, 32) in mehreren parallel zueinander verlaufenden Teilstrecken (23c) mäanderförmig hin- und hergeführt ist.

9. Vorrichtung nach Anspruch 8, dadurch gekennzeichnet, daß die Umlenkrollen (24, 25) auswechselbar sind und ihre Achsen in den Holmen (20a, 20b) verstellbar angeordnet sind.

Fig. 1

FIG.2

Fig.3

Fig.4

## Fig.5

## Fig.6

Fig.7

Fig.8

Europäisches
Patentamt

**EUROPÄISCHER RECHERCHENBERICHT**

0119283

Nummer der Anmeldung

EP 83 10 2521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 487 243 (SIROPEX S.A.) * Insgesamt * | 1-3 | B 28 B 11/14 |
| | --- | | |
| X | BE-A- 668 483 (E. MERZ) * Seite 5, Zeilen 22-30; Seite 6, Zeilen 1-7; Seite 7, Zeilen 4-18; Seite 18, Zeilen 19-30; Seite 19, Zeilen 1-14; Figur 4 * | 1-3 | |
| | --- | | |
| Y | FR-A- 368 953 (E.A. DOUBLIEZ) * Insgesamt * | 1,5,6 | |
| | --- | | |
| Y | FR-A-1 136 156 (A.R. VIANET) * Insgesamt * | 1,5,6 | |
| | --- | | |
| A | FR-A-1 123 947 (A.R. VIANET) * Insgesamt * | 4,7-9 | RECHERCHIERTE SACHGEBIETE (Int. Cl. ³) |
| | --- | | B 28 B |
| A | US-A-3 525 278 (C. SAGONA) * Spalte 1, Zeilen 6-12; Spalte 1, Zeilen 51-59; Spalte 2, Zeilen 40-51; Figuren 3,7 * | 8,9 | B 28 D B 26 D |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 16-11-1983 | GOURIER P.A. |